# EUROPÄISCHE PATENTSCHRIFT

(11) **EP 0 379 901 B1**
(45) Veröffentlichungstag und Bekanntmachung des Hinweises auf die Patenterteilung: **07.09.1994**
(21) Anmeldenummer: 90100535.5
(22) Anmeldetag: 11.01.1990
(51) Int. Cl.: H04B 3/54, H04L 12/10

(54) **Nachrichtenaufbereitungseinrichtung**
Data-processing apparatus
Dispositif de traitement d'information

(30) Priorität: 27.01.1989 EP 89101452
(43) Veröffentlichungstag der Anmeldung: 01.08.1990
(73) Patentinhaber: SIEMENS AKTIENGESELLSCHAFT, 80333 München (DE)
(72) Erfinder: Zierhut, Hermann, Dipl.-Ing., D-8000 München 83 (DE)

(56) Entgegenhaltungen:
- DE-A- 3 043 059
- DE-B- 2 113 931
- US-A- 3 290 653

## Beschreibung

Die Erfindung bezieht sich auf eine Nachrichtenaufbereitungseinrichtung, die mit einem Wandler arbeitet, der als Weiche für Gleichstromenergie- und für Wechselspannungsinformationsübertragung dient, im Einzelnen nach Gattungsbegriff von Patentanspruch 1. Die Nachrichtenaufbereitungseinrichtung arbeitet zumindest mit zwei Wicklungen auf der Energie bereitstellenden Seite, zwischen denen in Reihenschaltung ein Informationssignale übertragender Kondensator angeordnet ist und die an ihren anderen Enden jeweils mit einer Übertragungsleitung für Gleichstomenergie und für Wechselpsannungsinformation verbunden sind.

Bei einer bekannten derartigen Anordnung (DE-A-2 113 931) wird jeweils ein Sender über Leitungen mit einem Empfänger verbunden, wobei mehrere Sender sternförmig an einer zentralen Empfangsstation jeweils mittels eines Zweileiternetzes angeschlossen sind. Dieses Netz führt auch Gleichstrom zur Versorgung des Bordnetzes der jeweiligen Sendestation zu. Als Weiche für Energie und Nachrichten wird jeweils am Anfang und Ende der Übertragungsleitung ein Übertrager verwendet, wobei Übertragerspulen in Reihe in der Übertragungsleitung angeordnet sind. Ein Bussystem mit mehreren gleichberechtigten Teilnehmerstation in einem Zweileiternetz läßt sich hiernach nicht aufbauen.

Bussysteme sind in den verschiedenartigsten Ausführungen und mit den verschiedenartigsten Übertragungsphilosopien bekannt. Es können digitale Daten übertragen werden zum Messen oder Steuern oder es können Analogsignale übertragen werden. Bus-Systeme eignen sich auch zur Sprachübertragung.

Mit einem Bus in Verbindung stehende Stationen werden über Bus-Ankoppler angeschlossen. Die Stationen können Daten verarbeiten oder auch Sensoren, Installationsgeräte oder motorisch angetriebene Geräte wie Jalousien betreiben. Solche Systeme können zentral oder dezentral ausgeführt sein, wobei außer der Information, den Nachrichten, auch die Energie für die Bordnetze zuzuführen ist.

Der Erfindung liegt die Aufgabe zugrunde, eine busfähige Nachrichtenaufbereitungseinrichtung zu entwickeln, die besonders wirtschaftlich mit einem kleinen Wandler bezogen auf die zu verarbeitende Leistung arbeitet.

Die Lösung der geschilderten Aufgabe erfolgt nach der Erfindung durch eine Nachrichtenaufbereitungseinrichtung nach Patentanspruch 1. Danach weist der Wandler zumindest zwei Wicklungen auf der Energie bereitstellenden Seite auf, zwischen denen in Reihenschaltung ein Kondensator angeordnet ist und die an ihren anderen Enden jeweils mit einer Übertragungsleitung für Gleichstromenergie und Wechselspannungsinformation verbunden sind. Der Kondensator trennt die Gleichspannung und er ist so auszulegen, daß er die Informationssignale überträgt, also für diese leitend ist. Der Wandler arbeitet mit einer Wicklung auf der Information empfangenden Seite und er ist lediglich auf diesen verhältnismäßig geringen Leistungsbedarf auszulegen. Zwischen den Übertragungsleitungen sind steuerbare inverse Ventile mit ihren Ausgangselektroden angeschlossen. Ihre Steuerelektroden sind während der Sendezeit an eine eingeprägte Spannungsquelle angeschlossen. Hierzu ist zumindest in einer Anschlußleitung der eingeprägten Spannungsquelle ein von der Sendespannung gesteuertes Ventil eingeschaltet. Bei der geschilderten Anordnung, bei der die steuerbaren inversen Ventile zwischen dem Wandler und den Anschlüssen für Übertragungsleitungen oder einen Bus, angeordnet sind, erzielt man einen Sendebetrieb, der vor dem Wandler, also auf der Bus-Seite, durchgeführt wird. Der Wandler wird also mit der im Vergleich zur Empfangsleistung hohen Sendeleistung umgangen, so daß er besonders klein und wirtschaftlich ausgeführt werden kann.

Die steuerbaren Ventile können ein npn- und pnp-Transistor sein. Die steuerbaren Ventile können auch als N-Kanal-Fet und ein P-Kanal-Fet sein.

Nach einer Weiterbildung ist die eingeprägte Spannungsquelle ein Spannungsteiler aus zumindest drei in Reihe geschalteten Widerstäden, an dessen mittlerem Widerstand die eingeprägte Spannung bereitgestellt wird, und der zumindest über ein von der Sendespannung gesteuertes Ventil mit den Anschlüssen des Kondensators verbunden ist. Während ein Sendesignal ansteht, werden die inversen Ventile durch die Kopplung über den mittleren Widerstand des Spannungsteilers leitend gesteuert. Bei einem pnp-Transistor kann der Steuerelektrode hierfür positive Sendespannung zugeführt werden. In den Sendepausen wird die Spannungsquelle bei Ausführung als Spannungsteiler dagegen allpolig abgeschaltet, also gegen die positive interne Übertragungsleitung und gegen die negative interne Übertragungsleitung. Bei Abschaltung stehen am mittleren Widerstand des Spannungsteilers Null Volt an, so daß er die Steuerelektroden der inversen Ventile kurzschließt, wodurch der Sendevorgang gegen Störeinflüsse aller Art, also gegen asymmetrische und gegen symmetrische Störeinflüsse unempfindlich wird.

Durch die eingeprägte Spannung an den Steuerelektroden der inversen Ventile wird über diese ein eingeprägter Strom gezogen, dessen Grenze durch den inneren Begrenzungswiderstand oder durch einen diskreten Begrenzungswiderstand bestimmt ist. Eine Spannungsbegrenzung des Sendevorgangs erfolgt durch den Spannungsteiler. Dadurch werden die Eigenschaften eines Wandlers, nämlich durch sein Übersetzungsverhältnis die Spannungsamplitude zu begrenzen und durch seinen Innenwiderstand die Amplitude des Sendestroms zu begrenzen, nachgebildet. Strom- und Spannungsbegrenzung der Sendeamplitude sind vorteilhaft, um insbesondere bei einem Kurzschluß auf der externen Übertragungsleitung, also beispielsweise einem Bus, die Sendeeinrichtung vor Schäden zu bewahren. Ein Sendeimpuls wird dabei weiter geformt durch die komplexe Last am Bus. Der Spannungsteiler kann auch mit anderen als ohmschen Widerständen arbeiten. Der mittlere Teil des Spannungsteilers kann außer einem Widerstand auch eine Zenerdiode sein.

Der Kondensator auf der Energie bereitstellenden Seite des Wandlers kann vorteilhafterweise als Speicherkondensator durch seine Bemessung oder durch seinen Aufbau ausgeführt sein, wodurch ein kurzzeitiger Ausfall der Versorgungsspannung überbrückt werden kann.

Die Wicklung auf der Information empfangenden Seite des Wandlers bildet in Verbindung mit dem Kondensator zugleich einen Freilaufkreis für die in der Spule während des Empfangs aufgenommene Energie, die in den Empfangspausen bei hoher, hinsichtlich des Empfangs umpolarisierter Spannung an den Wicklungsenden bereitsteht und zu Störungen in dem elektronischen Netzwerk führen könnte. Hierzu genügt es, der Wicklung ein Ventil, im einfachsten Fall eine Diode, in Reihe zu schalten und die Empfangsspannung zwischen Wicklung und Ventil abzunehmen.

Die Erfindung soll nun anhand von in der Zeichnung grob schematisch wiedergegebenen Ausführungsbeispielen näher erläutert werden:

In FIG 1 ist für eine Nachrichtenaufbereitungseinrichtung eine Schaltungsanordnung wiedergegeben.
In FIG 2 ist ein anderes Ausführungsbeispiel für die inversen Ventile veranschaulicht.

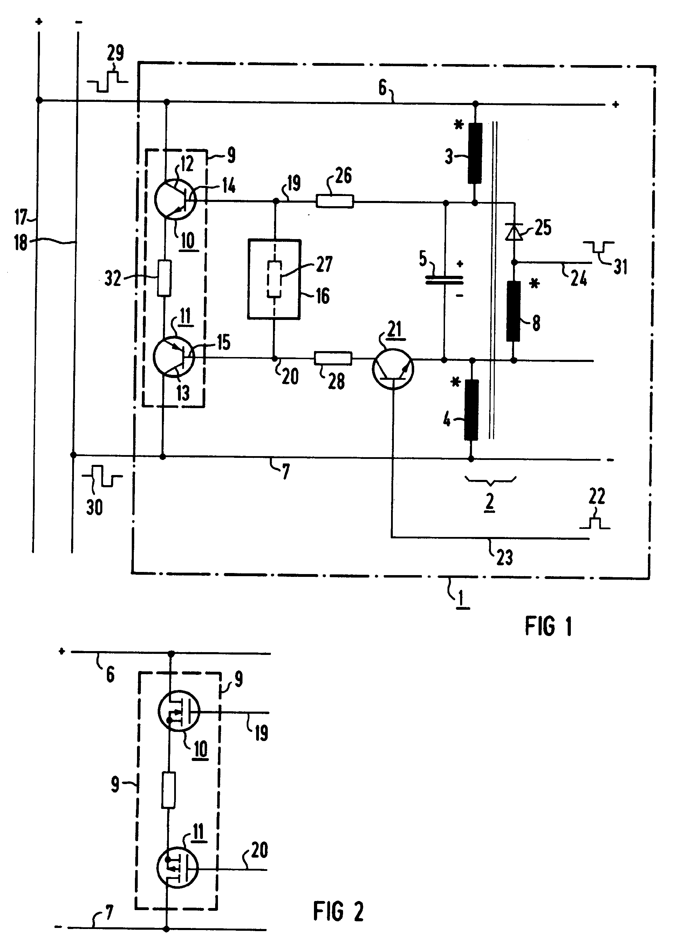

Die Nachrichtenaufbereitungseinrichtung 1 nach FIG 1 arbeitet mit einem Wandler, der als Weiche für Gleichstromenergie- und für Wechselspannungsinformationsübertragung dient. Über den Wandler wird nach der Erfindung jedoch nur die empfangene Information übertragen. Der Wandler 2 weist zumindest zwei Wicklungen 3, 4 auf der Energie bereitstellenden Seite auf, zwischen denen in Reihenschaltung ein Kondensator 5 angeordnet ist, der für empfangene Informationssignale leitend ist und für die bereitzustellende Gleichstromenergie eine Sperre darstellt. Wenn der Kondensator 5 eine entsprechende Kapazität aufweist bzw. als Speicherkondensator ausgeführt ist, kann er die an den Übertragungsleitungen 6 und 7 bereitgestellte Gleichstromenergie für die Nachrichtenaufbereitungseinrichtung 1 bei kurzen externen spannungsunterbrechungen die Gleichspannung puffern. Die Spulen 3 und 4 sind an ihrem mit dem Kondensator 5 nicht verbundenen Ende jeweils mit einer der Übertragungsleitungen 6 bzw. 7 für Gleichstromenergie und für Wechselspannungsinformation verbunden. Der Wandler 2 arbeitet mit einer Wicklung 8 auf der empfangene Information verarbeitenden Seite.

Zwischen den Übertragungsleitungen ist eine Anordnung 9 mit zwei steuerbaren inversen Ventilen mit ihren Ausgangselektroden 12, 13 angeschlossen. Ihre Steuerelektroden 14, 15 sind während eines Sendesignals an eine eingeprägte Spannungsquelle 16 angeschlossen. Dadurch erzielt man einen Sender, der hinsichtlich des Wandlers 2 auf der Anschlußseite der Nachrichtenaufbereitungseinrichtung 1 eingeschaltet ist. Die Anschlußleitung ist im Ausführungsbeispiel eine Bus-Leitung mit den Bus-Leitern 17 und 18. Für den Sendebetrieb ist im Ausführungsbeispiel in einer der Anschlußleitungen 19 und 20 ein von der Sendespannung gesteuertes Ventil 21 zwischengeschaltet. Im Ausführungsbeispiel ist es in der Anschlußleitung 20 angeordnet, die zwischen Kondensator 5 und der Wicklung 3 bzw. 4 auf der Gleichstromenergie bereitstellenden Seite verbunden ist. Im Ausführungsbeispiel ist das von der Sendespannung gesteuerte Ventil 21 in der Anschlußleitung 20 angeordnet. Ein positives Sendesignal 22 wird dem Ventil 21 über eine Sendeleitung 23 zugeführt.

Verständlicherweise kann der Spannungsteiler mit den Widerständen 26, 27, 28 auch beidseits symmetrisch durch ein mit dem Ventil 21 gekoppeltes Ventil vor dem Widersand 26 abgeschaltet werden. Das symmetrische und gegen Störungen unempfindliche verhalten wird dadurch weiter gefördert.

Für den Empfang ist eine Empfangsleitung 24 an einem Ende der Wicklung 8 auf der empfangenen Information verarbeitenden Seite angeschlossen. Dem Empfang dient ein Ventil 25, im Ausführungsbeispiel eine Diode. Zwischen dieser und der Wicklung 8 ist im Ausführungsbeispiel die Empfangsleitung 24 angeschlossen.

Die steuerbaren Ventile 10 und 11 sind im Ausführungsbeispiel für das Ventil 10 ein npn-Transistor und für das Ventil 11 ein pnp-Transistor. Im Ausführungsbeispiel nach FIG 2 ist das Ventil 10 ein N-Kanal Mos-Fet und für das Ventil 11 ein P-Kanal Mos-Fet.

Nach einer Weiterbildung ist die eingeprägte Spannungsquelle 16, wie in FIG 1 veranschaulicht, Teil eines Spannungsteilers aus zumindest drei in Reihe geschalteten Widerständen 26, 27 und 28, an dessen mittlerem Widerstand 27 die eingeprägte Spannung bereitgestellt wird. Er ist über ein von der Sendespannung gesteuertes Ventil 21 mit den Anschlüssen des Kondensators 5 verbunden.

Von der Bus-Leitung mit den Bus-Leitern 17 und 18 wird der Nachrichtenaufbereitungseinrichtung 1 positive Gleichspannung vom Bus-Leiter 17 und negative Gleichspannung vom Bus-Leiter 18 zugeführt. Überlagert führen die Bus-Leiter zueinander symmetrische Wechselspannungssignale 29 und 30. Die Gleichspannung steht am Ende der Übertragungsleitungen 6 und 7 in der Nachrichtenaufbereitungseinrichtung bereit. Wechselspannung der empfangenen Information führt bei einem an der Übertragungsleitung 6 anstehenden negativen Signal und einem an der Übertragungsleitung 7 anstehenden positiven Signal zu einem Stromfluß über den Kondensator 5 und einer übertragenen Spannung in der Wicklung 8. Mit dem Sternzeichen ist jeweils der Wicklungssinn veranschaulicht, so daß anhand der Zeichnung orientiert bei einem negativen Signal oben an der Wicklung 3 an der Wicklung 8 oben ein negatives Empfangssignal 31 ansteht. Am Ende des Signals führt die magnetische Trägheit der Wicklung 8 dazu, daß an der Wicklung 8 oben ein verhältnismäßig höheres positives Signal ansteht, das über die Diode 25 und den Kondensator 5 einen Freilaufkreis vorfindet.

Wenn an der Sendeleitung 23 ein positives Sendesignal 22 ansteht, wird das von der Sendespannung gesteuerte Ventil 21 leitend, so daß das Ventil 11 der inversen Ventile 10 und 11 leitend wird und wegen der Kopplung über den Widerstand 27 auch das Ventil 10 leitend gesteuert wird. Es ist zweckmäßig, zur Strombegrenzung einen Begrenzungswiderstand 32 zu den inversen Ventilen 10 und 11 in Reihe zu schalten. Aus Symmetriegründen ist es vorteilhaft, den Begrenzungswiderstand 32 zwischen den Ventilen 10 und 11 anzuordnen.

Zum Betreiben der inversen Ventile 10 und 11 mittels der eingeprägten Spannungsquelle 16 ist es günstig, die Quelle für eine eingeprägte Spannung als Teil eines Spannungsteilers mit den Widerständen 26, 27 und 28 auszuführen. Anstelle des mittleren Widerstands 27 oder in Verbindung mit diesem kann auch ein anderes geeignetes Schaltungsmittel, beispielsweise eine Zenerdiode eingesetzt sein. Auch wenn nicht gesendet wird, liegt dann zwischen den Übertragungsleitungen 6 und 7 bei gesperrten Ventilen 10 und 11 eine völlig symmetrische Last. Dadurch können auf die Bus-Leiter 17 und 18 keine Störsignale übertragen werden.

Eine Nachrichtenaufbereitungseinrichtung nach der Erfindung arbeitet wegen der eingeprägten Spannungsquelle 16 mit einem eingeprägten Strom in der Anordnung 9 mit den zwei inversen Ventilen 10 und 11. Das führt zu einem Sendebetrieb, der gegen Störungen unempfindlich ist.

Bei der Nachrichtenverarbeitungseinrichtung in der Weiterbildung mit dem Spannungsteiler für die eingeprägte Spannungsquelle 16 erzielt man eine Spannungsbegrenzung beim Sendebetrieb und eine Strombegrenzung durch den Begrenzungswiderstand 32, der auch Teil der inversen Ventile 10 und 11 sein kann, so daß das Verhalten eines üblichen Wandlers hinsichtlich dieser erwünschten Eigenschaften nachgebildet wird. Durch eine derart erzielte Begrenzung der Amplitude der Sendespannung und des Sendestroms wird der Sendebetrieb gegen Störungen auf dem Bus, insbesondere gegen Kurzschlüsse am Bus, unempfindlich. Andererseits wird während des Sendebetriebs der Wandler 2 mit der Sendeenergie umgangen, da die Sendeleistung zwischen Wandler und Bus abgegeben wird. Der Wandler kann daher klein und wirtschaftlich ausgeführt sein. Man erzielt also einen bus-seitigen Sendebetrieb.

## Patentansprüche

1. Nachrichtenaufbereitungseinrichtung (1), die mit einem Wandler (2) arbeitet, der als Weiche für Gleichstromenergie- und für Wechselspannungsinformationsübertragung dient, der zumindest zwei Wicklungen auf der Energie bereitstellenden Seite aufweist, zwischen denen in Reihenschaltung ein Informationssignale übertragender Kondensator (5) angeordnet ist und die an ihren anderen Enden jeweils mit einer Übertragungsleitung (6, 7) für Gleichstromenergie und für Wechselspannungsinformation verbunden sind,
wobei der Wandler mit einer Wicklung (8) auf der empfangene Information verarbeitenden Seite arbeitet, **dadurch gekennzeichnet**, daß zwischen den Übertragungsleitungen (6, 7) zwei steuerbare inverse Ventile (10, 11) mit ihren Ausgangselektroden (12, 13) angeschlossen sind und deren Steuerelektroden (14, 15) während eines Sendesignals (22) an eine eingeprägte Spannungsquelle (16) angeschlossen sind.

2. Einrichtung nach Anspruch 1, **dadurch gekennzeichnet**, daß die steuerbaren inversen Ventile (10, 11) ein npn- und ein pnp-Transistor sind.

3. Einrichtung nach Anspruch 1, **dadurch gekennzeichnet**, daß die steuerbaren inversen Ventile (10, 11) ein N-Kanal-Fet und ein P-Kanal-Fet sind.

4. Einrichtung nach Anspruch 1, **dadurch gekennzeichnet**, daß die eingeprägte Spannungsquelle (16) Teil eines Spannungsteilers aus zumindest drei in Reihe geschalteten Widerständen (26, 27, 28) ist, an dessen mittlerem Widerstand (27) die eingeprägte Spannung bereitgestellt wird, und der zumindest über ein von der Sendespannung besteuertes Ventil (21) mit den Anschlüssen des Kondensators (5) verbunden ist.

5. Einrichtung nach Anspruch 1, **dadurch gekenn-zeichnet**, daß der Kondensator (5) ein Speicherkondensator ist.

6. Einrichtung nach Anspruch 4, **dadurch gekennzeichnet**, daß zwischen den inversen Ventilen (10, 11) ein Begrenzungswiderstand (32) eingeschaltet ist.

## Claims

1. Message-processing apparatus (1) which employs a converter (2) which serves as a splitter for direct-current energy transmission and for alternating-voltage information transmission, which converter has at least two windings on the energy-providing side, between which an information-signal-transmitting capacitor (5) is disposed in a series connection and which are in each case connected at their other ends to a transmission line (6, 7) for direct-current energy and for alternating-voltage information, the converter employing a winding (8) on the received-information-processing side, characterized in that two controllable inverting valves (10, 11) are connected by means of their output electrodes (12, 13) between the transmission lines (6, 7) and their control electrodes (14, 15) are connected to an impressed voltage source (16) during a transmission signal (22).

2. Apparatus according to Claim 1, characterized in that the controllable inverting valves (10, 11) are an n-p-n transistor and a p-n-p transistor.

3. Apparatus according to Claim 1, characterized in that the controllable inverting valves (10, 11) are an n-channel FET and an p-channel FET.

4. Apparatus according to Claim 1, characterized in that the impressed voltage source (16) is part of a voltage divider comprising at least three resistors (26, 27, 28) connected in series, at whose centre resistor (27) the impressed voltage is provided and which is connected to the terminals of the capacitor (5) at least via one valve (21) controlled by the transmitting voltage.

5. Apparatus according to Claim 1, characterized in that the capacitor (5) is a storage capacitor.

6. Apparatus according to Claim 4, characterized in that a limiting resistor (32) is inserted between the inverting valves (10, 11).

## Revendications

1. Dispositif de préparation d'informations (1), qui travaille avec un transformateur (2), qui est utilisé en tant qu'aiguillage pour la transmission d'une énergie à courant continu et la transmission d'informations à tension alternative et qui possède au moins deux enroulements situés sur le côté de délivrance de l'énergie et entre lesquels est branché, selon un circuit série, un condensateur (5) qui transmet des signaux d'informations, et qui sont raccordés, au niveau de leurs autres extrémités, respectivement à une ligne de transmission (6, 7) pour l'énergie à courant continu et pour l'information à tension alternative, le transformateur travaillant avec un enroulement (8) situé sur le côté de traitement de l'information reçue, caractérisé par le fait que deux valves inverses commandables (10, 11) sont raccordées, par leurs électrodes de sortie (12, 13), entre les lignes de transmission (6, 7) et que leurs électrodes de commande (14, 15) sont raccordées, pendant la présence d'un signal d'émission (22), à une source de tension injectée (16).

2. Dispositif suivant la revendication 1, caractérisé par le fait que les valves inverses commandables (10, 11) sont formées par un transistor npn et un transistor pnp.

3. Dispositif suivant la revendication 1, caractérisé par le fait que les valves inverses commandables (10, 11) sont un transistor (Fet) à canal N et un transistor (Fet) à canal P.

4. Dispositif suivant la revendication 1, caractérisé par le fait que la source de tension injectée (16) fait partie d'un diviseur de tension constitué par au moins trois résistances (26, 27, 28) branchées en série et sur la résistance médiane (27) duquel est délivrée la tension injectée et qui est reliée au moins par l'intermédiaire d'une valve (21) commandée par la tension d'émission, aux bornes du condensateur (5).

5. Dispositif suivant la revendication 1, caractérisé par le fait que le condensateur (5) est un condensateur accumulateur d'énergie.

6. Dispositif suivant la revendication 4, caractérisé par le fait qu'une résistance de limitation (32) est branchée entre les valves inverses (10, 11).
